# EUROPÄISCHE PATENTSCHRIFT

(11) **EP 2 918 704 B1**
(45) Veröffentlichungstag und Bekanntmachung des Hinweises auf die Patenterteilung: **07.08.2019**
(21) Anmeldenummer: 14000963.0
(22) Anmeldetag: 14.03.2014
(51) Int. Cl.: C23C 18/16, C23C 18/20, C23C 18/30, C23C 18/32, C23C 18/38, C23C 18/18, B29C 70/54

(54) **Verfahren zum Konditionieren eines Bauteils**
Method for conditioning a component
Procédé de conditionnement d'un composant

(43) Veröffentlichungstag der Anmeldung: 16.09.2015
(73) Patentinhaber: FRANZ Oberflächentechnik GmbH & Co KG, 82538 Geretsried (DE)
(72) Erfinder: Franz, Wolf-Dieter, 82538 Geretsried (DE)
(74) Vertreter: König Szynka Tilmann von Renesse Patentanwälte Partnerschaft mbB

(56) Entgegenhaltungen:
- EP-A1- 0 562 393
- EP-A1- 0 761 842
- EP-A1- 1 364 984
- GB-A- 2 460 162
- US-A1- 2010 304 063

## Beschreibung

Die vorliegende Erfindung betrifft ein Verfahren zum Konditionieren eines faserverstärkten Kunststoffbauteils für ein Beschichten mit einer Metallschicht in einem Bad.

Bei einem entsprechenden Bauteil können in das Kunststoffmaterial Fasern eingebettet sein, insbesondere zur mechanischen Verstärkung des Bauteils. Ein solches Bauteil kann sich beispielsweise durch eine hohe Zugfestigkeit in Richtung der Fasern auszeichnen und aufgrund dieser mechanischen Verstärkung zugleich insgesamt gewichtsreduziert gestaltet werden. Dies kann beispielsweise mit Blick auf Leichtbauanwendungen von Interesse sein.

Aus der US 2010/304063 A1, der EP 1 364 984 A1 und der EP 0 761 842 A1 sind Verfahren zur metallischen Beschichtung von Kunststoffbauteilen bekannt. Dabei wird das Kunststoffbauteil teilweise vor dem Aufbringen der eigentlichen Metallschicht mit einer Polymer- bzw. Harzschicht überzogen, um die Haftung der Metallschicht zu verbessern.

Der vorliegenden Erfindung liegt die Aufgabe zugrunde, ein besonders vorteilhaftes Verfahren zum Konditionieren eines faserverstärkten Kunststoffbauteils anzugeben, und zwar als Vorbereitung für ein Beschichten des Bauteils mit einer Metallschicht in einem Bad.

Erfindungsgemäß löst diese Aufgabe ein Verfahren gemäß Anspruch 1.

Zur Vorbereitung des faserverstärkten Kunststoffbauteils (im Folgenden der Einfachheit halber auch nur "Bauteil") wird auf die zu beschichtende Oberfläche also ein Dünnfilm aus Haftvermittler-Material aufgebracht. Der Erfinder hat einerseits im Falle eines Haftvermittler-Materials auf Epoxid-Basis für eine darauf abgeschiedene Metallschicht eine gute Haftung beobachtet; auch auf einem Haftvermittler-Material auf Polyurethan-Basis zeigt eine Metallschicht eine gute Haftung.

Bei dem Material auf Epoxid-Basis kann die Basis neben dem Epoxid auch einen weiteren Bestandteil aufweisen, beispielsweise Acrylat. Vorzugsweise liegt der Anteil des Epoxids an der Basis bei dieser Reihenfolge zunehmend bevorzugt mindestens 30 Gew.-%, 40 Gew.-%, 50 Gew.-%, 60 Gew.-%, 70 Gew.-%, 80 Gew.-% bzw. 90 Gew.-%. Bevorzugt können auch Ausführungsformen sein, bei welchen allein Epoxid als Basis vorgesehen ist. Selbiges gilt für das Material auf Polyurethan-Basis, und es sollen insoweit dieselben Gew.-%-Angaben offenbart sein.

Der Erfinder hat jedenfalls festgestellt, dass eine dann in einem Bad auf einen entsprechenden Dünnfilm abgeschiedene Metallschicht gut haftet. Damit können nun beispielsweise auch Glasfaser-verstärkte Kunststoffbauteile metallbeschichtet werden, bei welchen der Erfinder ohne vorherige Konditionierung vielfach nicht zufriedenstellende Ergebnisse die Haftung einer Metallschicht betreffend beobachtet hat. Andererseits kann eine bevorzugte Anwendung jedoch wie nachstehend weiter im Detail erläutert auch ein Kohlenstofffaser-verstärktes ("Kohlefaser-verstärktes") Bauteil betreffen. Auf ein solches kann zwar prinzipiell auch ohne vorherige Konditionierung eine Metallschicht in einem Bad abgeschieden werden, jedoch kann es hier hinsichtlich einer Korrektur von Fehlstellen an der Oberfläche besondere Herausforderungen geben.

Insofern kann sich ein besonderer Vorteil des vorgeschlagenen Verfahrens dahingehend ergeben, dass einerseits mit dem Aufbringen des Haftvermittler-Dünnfilms derartige Fehlstellen aufgefüllt werden. Andererseits sind die vom Erfinder für eine auf das ausgehärtete Haftvermittler-Material abgeschiedene Metallschicht beobachteten Hafteigenschaften so überraschend gut, dass nicht bloß einzelne Fehlstellen ausgebessert werden müssen/können, sondern eben ein Dünnfilm großflächig aufgebracht werden kann. Dies kann die Vorbereitung der zu beschichtenden Oberfläche erheblich vereinfachen, insbesondere in einer Massenfertigung.

Anfängliche Untersuchungen des Erfinders gingen nämlich dahin, besagte Fehlstellen einzeln mit flüssigem Polymethylmethacrylat (PMMA) aufzufüllen. Dabei hätten aus Effizienzgründen jedoch nur einige der Fehlstellen berücksichtigt werden können, wären also nur die größten aufgefüllt worden. Der Erfinder hat nämlich beobachtet, dass auf dem PMMA eine anschließend in einem Bad abgeschiedene Metallschicht allenfalls schlecht haftet. Eine großflächige Aufbringung von PMMA wäre deshalb nicht möglich. Im Gegensatz zu den Materialien auf Epoxid-/Polyurethan-Basis scheint das PMMA nicht hinreichend freie Valenzen zur Verfügung zu stellen.

Mit dem erfindungsgemäß vorgesehenen Haftvermittler-, insbesondere EpoxidMaterial kann indes großflächig ein Dünnfilm aufgebracht werden, was die Prozessierung erheblich vereinfacht.

Das "fließfähige" Haftvermittler-Material ist vorzugsweise streichbar; bevorzugt ist es niederviskos, mittelviskos oder hochviskos. Die Viskosität kann beispielsweise bei in dieser Reihenfolge zunehmend bevorzugt mindestens 6500 mPa s, 7500 mPa s, 8000 mPa s bzw. 8500 mPa s liegen; mögliche Obergrenzen können etwa bei höchstens 18000 mPa s, 17000 mPa s, 16000 mPa s bzw. 15500 mPa s liegen (bei 20 °C).

Weitere bevorzugte Ausführungsformen finden sich in der nachstehenden Beschreibung und in den abhängigen Ansprüchen, wobei auch weiterhin nicht immer im Einzelnen zwischen der Darstellung von Verfahrens- und Verwendungs- bzw. Vorrichtungsaspekten unterschieden wird; jedenfalls implizit ist die Offenbarung hinsichtlich sämtlicher Anspruchskategorien zu lesen.

Wie bereits erwähnt, ist das faserverstärkte Kunststoffbauteil vorzugsweise ein Kohlefaser-verstärktes Kunststoffbauteil. In diesem Zusammenhang kommen die vorstehend erläuterten Vorteile zum Tragen, weil Kohlefaser-verstärkte Bauteile oftmals Fehlstellen an der zu beschichtenden Oberfläche zeigen, etwa Poren mit Durchmessern von einigen Hundert Mikrometern. Die Kohlefasermatten, die vorgetränkt und in die Form eingelegt werden, können nämlich Luft in ihrem Gewebe enthalten; wird dann zum Aushärten Druck aufgebracht, treten Luftbläschen aus. Die resultierenden Fehlstellen an der zu beschichtenden Oberfläche können mit dem erfindungsgemäßen Verfahren vorteilhafterweise zuverlässig und zugleich hinsichtlich des Durchsatzes effizient ausgeglichen werden.

In bevorzugter Ausgestaltung wird die zu beschichtende Oberfläche vor dem Aufbringen des Dünnfilms geschliffen, wird also mit einer geometrisch unbestimmten Schneide etwas Material abgetragen, um eine gewisse Glättung der Oberfläche zu erreichen.

Vorzugsweise wird die zu beschichtende Oberfläche vor dem Aufbringen des Dünnfilms mit Ultraschall in einem Bad gereinigt, was einerseits beispielsweise Schleifreste entfernen helfen, andererseits jedoch generell eine benetzungsfreundliche Oberfläche erzeugen kann. Letzteres ist hinsichtlich der anschließenden Beschichtung in einem Bad vorteilhaft.

In bevorzugter Ausgestaltung wird das Haftvermittler-Material mit einem Pinsel aufgebracht. Im Allgemeinen wäre indes beispielsweise auch ein Aufsprühen oder Dispensen möglich.

Bevorzugt wird das Haftvermittler-Material zunächst in einem Überschuss aufgebracht, was besonders bevorzugt mit einem Pinsel erfolgt. Anschließend wird das überschüssige Haftvermittler-Material derart abgewischt, dass noch ein Dünnfilm auf der zu beschichtenden Oberfläche verbleibt. Das Abwischen kann beispielsweise mit einem Tuch erfolgen. Auf diese Weise kann einerseits für den Dünnfilm gut eine gewünschte Schichtdicke erreicht werden, lassen sich jedoch andererseits vorteilhafterweise auch etwaige Fehlstellen füllen.

Bei einer bevorzugten Weiterbildung wird das überschüssige Haftvermittler-Material erst nach einer Zeitdauer von mindestens 3 Min., in dieser Reihenfolge zunehmend bevorzugt mindestens 4 Min., 5 Min., 6 Min. bzw. 7 Min., abgewischt. Bevorzugte Obergrenzen können bei in dieser Reihenfolge zunehmend bevorzugt höchstens 20 Min., 18 Min., 16 Min., 14 Min. bzw. 12 Min. liegen. Die Zeitdauer wird ab dem Zeitpunkt genommen, zu welchem das Haftvermittler-Material vollständig auf die zu beschichtende Oberfläche aufgebracht ist.

Erfindungsgemäß hat das Bauteil beim Aufbringen des Haftvermittler-Materials eine erhöhte Temperatur von mindestens 30°C, wobei mindestens 40°C weiter und mindestens 50°C besonders bevorzugt sind. Die Obergrenze liegt (von den Untergrenzen unabhängig) bei höchstens 80°C oder gegebenenfalls bei höchstens 70°C bzw. höchstens 65°C.

Das Aushärten des Haftvermittler-Materials wird in bevorzugter Ausgestaltung durch Bestrahlung mit UV-Licht unterstützt, besonders bevorzugt erfolgt dies in einer verspiegelten UV-Kammer. Letzteres kann die zum Aushärten notwendige Behandlungsdauer verkürzen helfen, was insbesondere in einer Massenfertigung von Interesse ist.

Das Aushärten kann auch unter IR-Licht erfolgen, besonders bevorzugt in Kombination mit UV-Licht.

Generell kann auch ein Haftvermittler-Material bevorzugt sein, dem ein Härter beigegeben wird, also ein Zwei-Komponenten-System. Es kann also beispielsweise ein Zwei-Komponenten-Epoxid-Harz als Haftvermittler-Material vorgesehen werden.

Bei einer bevorzugten Ausführungsform wird das Haftvermittler-Material mit darin statistisch zufallsverteilten Metallpartikeln vorgesehen, finden sich in dem fließfähigen Haftvermittler-Material also Metallpartikel, die (gegebenenfalls von Gravitations-/Strömungseffekten abgesehen) hinsichtlich ihrer Anordnung darin zufallsverteilt sind. Das fließfähige Haftvermittler-Material mit den Metallpartikeln stellt in gewisser Hinsicht eine Art Suspension dar.

Mit dem entsprechenden Haftvermittler-Material werden dann also jedenfalls auch die Metallpartikel aufgebracht, was gegebenenfalls auch die nachfolgende Beschichtung in einem Bad betreffend Vorteile bieten kann. Vorzugsweise werden mit Blick auf ein Aushärten des Haftvermittler-Materials unter UV-Einwirkung reflektive Metallpartikel, besonders bevorzugt Aluminium-Partikel, eingebettet, was den Eintrag von UV-Licht in das Haftvermittler-Material verbessern helfen kann. Insbesondere im Falle Kohlefaser-verstärkter Bauteile hat der Erfinder nämlich anderenfalls beobachtet, dass diese Bauteile das UV-Licht zu einem nicht unerheblichen Teil absorbieren können, was die zum Aushärten notwendigen Behandlungsdauern deutlich verlängern kann (und wiederum hinsichtlich des Durchsatzes nachteilig ist).

In bevorzugter Ausgestaltung soll ein mittlerer Partikeldurchmesser der Metallpartikel nicht mehr als 7 µm, weiter bevorzugt nicht mehr als 6 µm, betragen. Mögliche Untergrenzen können (davon unabhängig) beispielsweise bei mindestens 2 µm, 3 µm bzw. 4 µm liegen. Selbst wenn Partikel dieser Größe an der dann beschichteten Oberfläche des Haftvermittler-Dünnfilms ein Stück weit "herausragen", liegen die Größen in einem Bereich, in dem die Unebenheiten von einer anschließend abgeschiedenen Metallschicht noch gut eingeebnet werden können. Die Partikel zeichnen sich also nicht durch die Metallschicht nach oben ab.

Die Erfindung richtet sich auch auf ein Verfahren zum Beschichten eines Bauteils mit einer Metallschicht in einem Bad, wobei das Bauteil zunächst in einer vorstehend beschriebenen Weise konditioniert wird. Anschließend wird die zu beschichtende Oberfläche in gasförmigem Schwefeltrioxid vorbehandelt, bevor die Metallschicht in einem Bad aufgebracht wird.

In diesem Zusammenhang ist auch anzumerken, dass im Allgemeinen nicht notwendigerweise die gesamte Oberfläche des Bauteils, die dann mit einer Metallschicht versehen ist, zuvor mit dem Haftvermittler-Dünnfilm beschichtet worden ist. Der Haftvermittler-Dünnfilm kann auch lokal begrenzt auf einen potentiell schlecht (im Bad) zu beschichtenden Bereich aufgebracht werden. Ein Beispiel hierfür kann eine Kante des Bauteils sein, etwa wenn diese noch Reste eines Trennmittels aufweist, welches das Auslösen des Bauteils aus einer Form bei der Herstellung vereinfacht (auf dem die Metallschicht jedoch nicht/schlecht haftet). So kann beispielsweise auf ein aufwendiges Sandstrahlen einer solchen Kante verzichtet und diese anstatt dessen mit einem Haftvermittler-Dünnfilm versehen werden, besonders bevorzugt in Kombination mit einer vorherigen Ultraschallreinigung in einem Bad.

Nochmals zu dem Anteil der mit dem Haftvermittler-Dünnfilm versehenen Oberfläche (deren Flächeninhalts) an der Gesamtfläche einer Metallschicht auf dem Bauteils: Besagter Anteil soll in dieser Reihenfolge zunehmend bevorzugt bei mindestens 5%. 10%, 15%, 20%, 25%, 30%, 35%, 40%, 45%, 50%, 55%, 60%, 65%, 70%, 75%, 80%, 85%, 90% bzw. 95% liegen; besonders bevorzugt ist unter der gesamten Metallschicht (des Bauteils) ein Haftvermittler-Dünnfilm angeordnet.

Der Haftvermittler-Dünnfilm kann eine Fläche von beispielsweise mindestens 1 cm², 5 cm², 10 cm², 15 cm² bzw. 20 cm² haben; mögliche Obergrenzen können etwa bei höchstens 1 m², 0,5 m², 0,25 m² liegen.

Der Haftvermittler-Dünnfilm hat eine (senkrecht zur Bauteiloberfläche genommene) Dicke von vorzugsweise mindestens 0,5 µm, weiter bevorzugt mindestens 1 µm; davon unabhängige Obergrenzen liegen bei vorzugsweise höchstens 10 µm, weiter bevorzugt höchstens 7 µm, besonders bevorzugt höchstens 5 µm. Die Dicke wird dabei in einem von Fehlstellen (der Bauteiloberfläche) freien Bereich betrachtet.

Im Folgenden werden das Abscheiden der Metallschicht und die Vorbehandlung in gasförmigem Schwefeltrioxid, die dem vorhergeht, weiter im Detail erläutert.

Das Abscheiden der Metallschicht kann beispielsweise ein Bekeimen des Bauteils (insbesondere des Haftvermittler-Dünnfilms) mit Palladium umfassen; das Bauteil kann dazu (nach dem Vorbehandeln) zum Beispiel in eine saure, ionogene Palladiumlösung gegeben werden, wobei sich Palladiumionen an der Bauteiloberfläche (insbesondere auf dem Haftvermittler-Dünnfilm) anlagern. Diese können dann anschließend zu Palladiumkeimen umgewandelt werden, etwa in einem reduzierenden Bad.

Üblicherweise wird dann zunächst eine Metallschicht stromlos, also chemisch, abgeschieden. Dabei lagert sich das Metall, beispielsweise chemisch abgeschiedenes Nickel, an den Palladiumkeimen an, und es bildet sich eine zunächst dünne Schicht aus (..seed layer"); diese kann anschließend verstärkt werden, und zwar vorzugsweise galvanisch, also elektrochemisch in einem Bad. Es kann also beispielsweise eine nach einer Palladiumbekeimung stromlos abgeschiedene Nickelschicht galvanisch verstärkt werden, etwa durch eine Nickel- und/oder Chrom- und/oder Kupferschicht.

Das Abscheiden der Metallschicht "in einem Bad" kann insoweit stromlos (chemisch) und/oder galvanisch erfolgen; bevorzugt ist eine Kombination aus stromloser und galvanischer Abscheidung.

Als besonders geeignet, auch mit Blick auf die Haftungseigenschaften der anschließend abgeschiedenen Metallschicht, hat sich für die Vorbehandlung in dem gasförmigen Schwefeltrioxid eine Zeitdauer von mindestens 10 Sekunden, in dieser Reihenfolge zunehmend bevorzugt mindestens 20 Sekunden, 30 Sekunden, 40 Sekunden, 50 Sekunden, erwiesen. Eine Begrenzung der Behandlungsdauer ist etwa auch einen Durchsatz in der Massenfertigung betreffend vorteilhaft; mögliche Obergrenzen liegen in dieser Reihenfolge zunehmend bevorzugt bei 10 Minuten, 9 Minuten, 8 Minuten, 7 Minuten, 6 Minuten bzw. 5 Minuten.

Das Bauteil (insbesondere der Haftvermittler-Dünnfilm) wird vorzugsweise unmittelbar nach der Behandlung in dem gasförmigen Schwefeltrioxid, noch vor dem Abscheiden der Metallschicht, gespült, und zwar besonders bevorzugt mit Wasser,

In bevorzugter Ausgestaltung ist das Kunststoffmaterial, in welches die Kohlenstofffasern eingebettet sind, ein duroplastisches Material; besonders bevorzugt ist ein Melaminharz als Matrixmaterial.

Das in bevorzugter Ausgestaltung vorgesehene Bekeimen des Bauteils (insbesondere des Haftvermittler-Dünnfilms) mit Palladium wurde bereits eingangs beschrieben; besonders bevorzugt wird im Anschluss daran eine Nickelschicht chemisch abgeschieden und wird diese dann durch eine galvanisch abgeschiedene Nickelschicht verstärkt. Im weiteren Verfahren kann dann beispielsweise eine Kupferschicht in einem sauren Glanzkupferverfahren (sauer Kupfer) abgeschieden werden, vorzugsweise mehrschrittig. also in mindestens zwei Glanzkupferschritten; zwischen den einzelnen Glanzkupferschritten wird die Oberfläche vorzugsweise geschliffen. Im Anschluss kann zum Beispiel eine weitere Nickelschicht abgeschieden und strichmattiert werden, um der Oberfläche eine ansprechende ästhetische Anmutung zu verleihen. Abschließend können dann beispielsweise noch eine Nickel- und/oder eine Chromschicht aufgebracht werden.

Die Erfindung betrifft auch ein Bauteil, dessen zu beschichtende Oberfläche entsprechend konditioniert und anschließend mit einer Metallschicht beschichtet wurde. Zwischen der Metallschicht und der Oberfläche des Bauteils ist also der Dünnfilm aus dem Haftvermittler-Material angeordnet, jedenfalls bereichsweise (vgl. die vorstehende Offenbarung den Anteil der konditionierten Oberfläche an der insgesamt mit Metall beschichteten Bauteiloberfläche betreffend).

In bevorzugter Ausgestaltung sind bei einem entsprechenden Bauteil an der beschichteten Oberfläche, also an der Bauteiloberfläche unter dem Haftvermittler-Dünnfilm, an die Oberfläche grenzende Poren angeordnet, die eine entlang der Oberfläche, also entlang einer Oberflächenrichtung, genommene Weite von bis zu 1 mm haben und mit dem Haftvermittler-Material versiegelt sind. Weitere bevorzugte Obergrenzen der Porenweite können bei höchstens 0,8 mm, weiter bevorzugt höchstens 0,6 mm, liegen.

Die mit dem Haftvermittler-Material "versiegelten" Poren müssen nicht notwendigerweise vollständig, also bis zum Porengrund aufgefüllt sein, was insbesondere sogenannte Kapillarporen betreffen kann. Diese können sich beispielsweise entlang der Gewebestruktur tief in das Bauteil hinein erstrecken. Mit der Versiegelung soll also jedenfalls ein an die Bauteiloberfläche grenzender Abschnitt aufgefüllt und die Pore so zur Bauteiloberfläche hin verschlossen sein.

Das erfindungsgemäße Verfahren eignet sich zur Herstellung eines entsprechend konditionierten und anschließend beschichteten Bauteils für ein Kraftfahrzeug, vorzugsweise für einen Personenkraftwagen. Bevorzugt ist das Bauteil dabei für den Innenraum des Kraftfahrzeugs und/oder als zur tragenden Struktur des Kraftfahrzeugs gehörendes Bauteil vorgesehen.

Vorzugsweise ist ein entsprechendes Bauteil also als zur tragenden Struktur eines Kraftfahrzeugs, insbesondere eines Personenkraftwagens, gehörendes Bauteil ausgelegt, also etwa als Bestandteil der Bodengruppe mit beispielsweise Motorträger, Längsträger und Querträger (sowie Kofferraumboden und Radkästen); das erfindungsgemäß beschichtete Bauteil kann also beispielsweise ein Teil des Längsträgers sein. Der Erfinder hat nämlich festgestellt, dass sich ein entsprechend beschichtetes Bauteil durch eine erhöhte mechanische Stabilität, etwa durch eine hohe Verwindungssteifigkeit, auszeichnen kann; vorteilhafterweise ist das Bauteil somit nicht nur als dekorative Verblendung einsetzbar (was im Allgemeinen selbstverständlich gleichwohl auch möglich ist), sondern auch als Teil der tragenden Struktur. Das Bauteil kann etwa auch ein Bestandteil der Karosserie des Kraftfahrzeugs sein.

Vorzugsweise stellt das Bauteil (auch) eine sichtbare Oberfläche des Kraftfahrzeuginnenraums zur Verfügung. Besonders bevorzugt ist das Bauteil zugleich Teil der tragenden Struktur, was Material einsparen helfen kann, etwa weil ansonsten ein Bauteil als Teil der tragenden Struktur und ein zusätzliches zu dessen Verblendung eingesetzt werden müssten; die Materialersparnis kann mit Blick auf eine insgesamt leichte Bauweise von Interesse sein. Das Bauteil kann also beispielsweise eine dekorative Oberfläche der Mittelkonsole eines Personenkraftwagens zur Verfügung stellen und zugleich Teil des Längsträgers sein.

Der Einsatz eines erfindungsgemäß beschichteten Bauteils im Innenraum eines Kraftfahrzeugs kann auch insofern vorteilhaft sein, als die gut haftende Metallschicht und auch der Haftvermittler-Dünnfilm darunter das Bauteil (bzw. Bruchstücke davon) im Bruchfall teilweise zusammenhalten bzw. zumindest das Absplittern kleinster Bruchstücke verhindern können. Kommt es also beispielsweise bei einem Verkehrsunfall zu einem Bruch des Bauteils, kann die Beschichtung die Gefahr der Bildung scharfkantiger Bruchstücke verringern.

Insoweit ist die Verwendung eines erfindungsgemäß beschichteten Bauteils generell in Anwendungen bevorzugt, bei denen einerseits eine Bruchgefahr bestehen kann und sich andererseits ein Personenkontakt mit Bruchstücken nicht ausschließen lässt. Neben dem Kraftfahrzeugbereich kann dies beispielsweise auch bei Sportgeräten und Luft- bzw. Wasserfahrzeugen der Fall sein.

Vorzugsweise weist ein erfindungsgemäß beschichtetes Bauteil auf der Metallbeschichtung keine weitere Beschichtung auf; es ist also insbesondere keine ansonsten gegebenenfalls als Splitterschutz notwendige Kunststoffbeschichtung vorgesehen, was auch hinsichtlich einer insgesamt kostengünstigen Bauweise vorteilhaft ist und Gewicht einsparen helfen kann.

Im Folgenden wird die Erfindung anhand eines Ausführungsbeispiels näher erläutert.

Zur Herstellung eines Kohlefaser-verstärkten Kunststoffbauteils, das als Teil des Längsträgers eines Kraftfahrzeugs ausgelegt ist und zugleich eine dekorative Oberfläche im Innenraum zur Verfügung stellen soll, werden zunächst Kohlefasermatten In dem Kunststoffmaterial, einem Melaminharz, vorgetränkt. Die vorgetränkten Matten werden dann in einer Form unter Druck verklebt und härten zu dem Bauteil aus. Dabei tritt etwas Luft aus, und es resultieren Poren in dem Bauteil mit einem mittleren Durchmesser von bis zu ca. 1 mm.

An die Bauteiloberfläche grenzende Poren stellen Fehlstellen auf einer Größenskala dar, die durch eine nachfolgende Metallbeschichtung nicht eingeebnet werden können, sich dann also auch an der Metalloberfläche abzeichnen würden.

Die zu beschichtende Oberfläche des Bauteils wird zunächst etwas geschliffen, um gröbere Unebenheiten zu entfemen. Der Materialabtrag geht jedoch nicht so weit, dass die porenbedingten Fehlstellen an der Oberfläche eingeebnet werden (zumal mit fortschreitendem Materialabtrag ja auch ständig neue Poren geöffnet würden).

Nach dem Schleifen wird das Bauteil in einem Ultraschallbad gereinigt, was einerseits Schleifreste entfernen hilft und andererseits die Benetzbarkeit der Oberfläche erhöhen kann.

Anschließend wird das Bauteil auf eine erhöhte Temperatur von ca. 50°C gebracht, bevor auf das so erwärmte Bauteil mit einem Pinsel ein haftvermittler-Material auf Epoxid-Basis großflächig aufgebracht wird, in diesem Fall auf die gesamte Bauteiloberfläche. Ein Beispiel für ein solches Haftvermittler-Material auf Expoxid-Basis ist "Polytec UV 2144" der Polytec PT GmbH.

Nach einer Verweildauer von ca. 5 Min. wird das mit dem Pinsel überschüssig aufgebrachte Haftvermittler-Material mit einem Tuch abgewischt, sodass an der Oberfläche ein Dünnfilm davon mit einer Dicke von ca. 3 - 4 µm verbleibt. Zudem legt sich das Haftvermittler-Material auch in die Fehlstellen, versiegelt es diese also.

Zum Aushärten des Haftvermittler-Materials wird das Bauteil in eine UV-Kammer gegeben und für mehrere Minuten mit UV-Licht bestrahlt. Dabei härtet das Haftvermittler-Material aus. Um bei diesem Prozessschritt die für das Aushärten notwendige Zeitdauer zu reduzieren, kann dem Haftvermittler-Material auch ein reflektiver Zusatz beigegeben werden, vorzugsweise Aluminium-Partikel.

Im Anschluss an das Aushärten wird das Bauteil in gasförmigem Schwefeltrioxid vorbehandelt, und zwar für eine Zeitdauer von einer Minute. Nach einem Spülen mit Wasser wird das Bauteil mit Palladium bekeimt, also zunächst in eine ionogene Palladiumlösung gegeben, wobei sich Palladiumionen an der Oberfläche anlagern; diese werden anschließend in einem reduzierenden Bad zu Palladiumkeimen.

An diesen Palladiumkeimen kann sich dann Nickel anlagern, und zwar bei einer im ersten Schritt stromlosen, also chemischen, Nickelabscheidung. Die stromlos abgeschiedene Nickelschicht wird In einem zweiten Schritt mit einer galvanisch abgeschiedenen Nickelschicht verstärkt.

Im Weiteren wird auf die galvanisch abgeschiedene Nickelschicht eine Kupferschicht (sauer Kupfer) aufgebracht, wird das Bauteil dann geschliffen und anschließend eine weitere Kupferschicht (sauer Kupfer) abgeschieden. Danach wird das Bauteil vernickeit, strichmattiert und zum Abschluss mit einer Nickel-/Chromschicht versehen.

## Patentansprüche

1. Verfahren zum Konditionieren eines faserverstärkten Kunststoffbauteils als Vorbereitung für ein Beschichten mit einer Metallschicht in einem Bad,
mit den Schritten:
- Vorsehen des faserverstärkten Kunststoffbauteils mit einer zu beschichtenden Oberfläche;
- Vorsehen eines fließfähigen Materials auf Epoxid- und/oder Polyurethan-Basis als Haftvermittler;
- Aufbringen eines Dünnfilms aus dem fließfähigen Haftvermittler-Material auf die zu beschichtende Oberfläche;
- Aushärten des Haftvermittler-Materials,
**dadurch gekennzeichnet, dass** das faserverstärkte Kunststoffbauteil beim Aufbringen des fließfähigen Haftvermittler-Materials eine erhöhte Temperatur von mindestens 30 °C und höchstens 80 °C hat.

2. Verfahren nach Anspruch 1, bei welchem das faserverstärkte Kunststoffbauteil ein Kohlenstofffaser-verstärktes Kunststoffbauteil ist.

3. Verfahren nach Anspruch 1 oder 2, bei welchem die zu beschichtende Oberfläche des faserverstärkten Kunststoffbauteils vor dem Aufbringen des Dünnfilms geschliffen wird.

4. Verfahren nach einem der vorstehenden Ansprüche, bei welchem die zu beschichtende Oberfläche des faserverstärkten Kunststoffbauteils vor dem Aufbringen des Dünnfilms mit Ultraschall gereinigt wird.

5. Verfahren nach einem der vorstehenden Ansprüche, bei welchem das fließfähige Haftvermittler-Material mit einem Pinsel aufgebracht wird.

6. Verfahren nach einem der vorstehenden Ansprüche, bei welchem das fließfähige Haftvermittler-Material zum Aufbringen des Dünnfilms in einem Überschuss aufgebracht wird und anschließend überschüssiges Haftvermittler-Material abgewischt wird, sodass der Dünnfilm in gewünschter Schichtdicke auf der zu beschichtenden Oberfläche verbleibt und auch etwaige Fehlstellen gefüllt sind.

7. Verfahren nach Anspruch 6, bei welchem das überschüssige Haftvermittler-Material erst nach einer Zeitdauer von mindestens 3 Minuten und höchstens 20 Minuten nach dem vollständigen Aufbringen des fließfähigen Haftvermittler-Materials abgewischt wird.

8. Verfahren nach einem der vorstehenden Ansprüche, bei welchem der Dünnfilm zum Aushärten des Haftvermittler-Materials mit UV-Licht bestrahlt wird.

9. Verfahren nach einem der vorstehenden Ansprüche, bei welchem das fließfähige Haftvermittler-Material mit darin statistisch zufallsverteilten Metallpartikeln vorgesehen wird, vorzugsweise Aluminium-Partikeln.

10. Verfahren nach Anspruch 9, bei welchem ein mittlerer Partikeldurchmesser der Metallpartikel mindestens 2 µm und nicht mehr als 7 µm beträgt.

11. Verfahren zum Beschichten eines faserverstärkten Kunststoffbauteils mit einer Metallschicht in einem Bad, bei welchem das faserverstärkte Kunststoffbauteil zunächst nach einem der vorstehenden Ansprüche konditioniert wird, die zu beschichtende Oberfläche dann in gasförmigem Schwefeltrioxid vorbehandelt wird und anschließend in dem Bad die Metallschicht aufgebracht wird.

12. Verfahren nach Anspruch 11, bei welchem der zwischen dem faserverstärkten Kunststoffbauteil und der Metallschicht angeordnete Dünnfilm aus dem Haftvermittler-Material eine Dicke von mindestens 0,5 µm und von höchstens 10 µm hat.

13. Verfahren nach Anspruch 12, bei welchem an der beschichteten Oberfläche des faserverstärkten Kunststoffbauteils, also an der Bauteiloberfläche unter dem Haftvermittler-Dünnfilm, Poren vorliegen, die eine entlang der Bauteiloberfläche genommene Weite von bis zu 1 mm haben und mit dem Haftvermittler-Material versiegelt sind.

## Claims

1. A method for conditioning a fibre-reinforced plastic component in preparation for coating with a metallic coating in a bath, comprising the following steps:
- provision of the fibre-reinforced plastic component comprising a surface to be coated;
- provision of a pourable epoxy- and/or polyurethane-based material as a bonding agent;
- attachment of a thin film made from the pourable bonding agent material to the surface to be coated;
- curing of the bonding agent material,
**characterised in that** the fibre-reinforced plastic component has an elevated temperature of at least 30°C and no more than 80°C when the pourable bonding agent material is applied.

2. The method according to claim 1, wherein the fibre-reinforced plastic component is a carbon fibre-reinforced plastic component.

3. The method according to claim 1 or 2, wherein the surface of the fibre-reinforced plastic component to be coated is sanded before the thin film is applied.

4. The method according to one of the preceding claims, wherein the surface of the fibre-reinforced plastic component to be coated is cleaned ultrasonically before the thin film is applied.

5. The method according to one of the preceding claims, wherein the pourable bonding agent material is applied with a brush.

6. The method according to one of the preceding claims, wherein the pourable bonding agent material for applying the thin film is applied with a surplus, and excess bonding agent material is then wiped off so that the required thickness of thin film remains on the surface to be coated and any voids are also filled in.

7. The method according to claim 6, wherein the excess bonding agent material is only wiped off after a period of at least 3 minutes and no more than 20 minutes after application of the pourable bonding agent material is complete.

8. The method according to one of the preceding claims, wherein the thin film is irradiated with UV light to cure the bonding agent material.

9. The method according to one of the preceding claims, wherein the pourable bonding agent material is provided with metallic particles, preferably aluminium particles, distributed in a statistically random manner.

10. The method according to claim 9, wherein the average diameter of the metallic particles is at least 2 µm and no more than 7 µm.

11. A method for coating a fibre-reinforced plastic component with a metallic coating in a bath, wherein the fibre-reinforced plastic is first conditioned according to one of the preceding claims, the surface to be coated is then pretreated in gaseous sulphur trioxide, whereupon the metallic coating is applied in the bath.

12. The method according to claim 11, wherein the thin film made from the bonding agent material located between the fibre-reinforced plastic component and the metallic coating has a thickness of at least 0.5 µm and no more than 10 µm.

13. The method according to claim 12, wherein there are pores on the coated surface of the fibre-reinforced plastic component, i.e. on the surface of the component underneath the thin film of bonding agent, these pores having a width of up to 1 mm as seen along the surface of the component and being sealed by the bonding agent material.

## Revendications

1. Procédé de conditionnement d'un composant en plastique renforcé de fibres en préparation d'un processus de revêtement au moyen d'une couche métallique dans un bain, comprenant les étapes consistant à :
- disposer du composant en plastique renforcé de fibres présentant une surface à revêtir,
- disposer d'un matériau coulant à base d'époxy et/ou de polyuréthane en tant que promoteur d'adhésion,
- appliquer un film mince composé du matériau promoteur d'adhésion coulant sur la surface à revêtir,
- durcir le matériau promoteur d'adhésion ;
**caractérisé en ce que** le composant en plastique renforcé de fibres présente, lors de l'application du matériau promoteur d'adhésion coulant, une température accrue qui est d'au moins 30 °C et d'au plus 80 °C.

2. Procédé selon la revendication 1, dans lequel le composant en plastique renforcé de fibres est un composant en plastique renforcé de fibres de carbone.

3. Procédé selon la revendication 1 ou 2, dans lequel la surface du composant en plastique renforcé de fibres à revêtir est poncée avant l'application du film mince.

4. Procédé selon l'une des revendications précédentes, dans lequel la surface du composant en plastique renforcé de fibres à revêtir est nettoyée aux ultrasons avant l'application du film mince.

5. Procédé selon l'une des revendications précédentes, dans lequel le matériau promoteur d'adhésion coulant est appliqué au pinceau.

6. Procédé selon l'une des revendications précédentes, dans lequel le matériau promoteur d'adhésion coulant servant à l'application du film mince est appliqué en excédent puis ledit excédent de matériau promoteur d'adhésion est éliminé par essuyage, si bien que le film mince demeure selon une épaisseur souhaitée sur la surface à revêtir, en comblant également les éventuels défauts.

7. Procédé selon la revendication 6, dans lequel l'excédent de matériau promoteur d'adhésion est éliminé par essuyage seulement après une période d'au moins 3 minutes et d'au plus 20 minutes après la fin de l'application du matériau promoteur d'adhésion coulant.

8. Procédé selon l'une des revendications précédentes, dans lequel le film mince est irradié à la lumière UV afin de durcir le matériau promoteur d'adhésion.

9. Procédé selon l'une des revendications précédentes, dans lequel le matériau promoteur d'adhésion coulant dispose de particules métalliques, de préférence des particules d'aluminium, qui y sont réparties de manière statiquement aléatoire.

10. Procédé selon la revendication 9, dans lequel le diamètre moyen des particules de métal est d'au moins 2 µm et ne dépasse pas 7 µm.

11. Procédé de revêtement d'un composant en plastique renforcé de fibres avec une couche métallique dans un bain, dans lequel le composant en plastique renforcé de fibres est tout d'abord conditionné selon l'une des revendications précédentes, puis la surface à revêtir est prétraitée dans du trioxyde de soufre gazeux avant application de la couche métallique dans le bain.

12. Procédé selon la revendication 11, dans lequel le film mince composé de matériau promoteur d'adhésion, situé entre le composant en plastique renforcé de fibres et la couche métallique, présente une épaisseur d'au moins 0,5 µm et d'au plus 10 µm.

13. Procédé selon la revendication 12, dans lequel des pores sont présents sur la surface du composant en plastique renforcé de fibres revêtue, c'est-à-dire sur la surface du composant située sous le film mince de promoteur d'adhésion, lesdits pores présentant une largeur allant jusqu'à 1 mm vue le long de la surface du composant, et étant obturés au moyen du matériau promoteur d'adhésion.
